# EUROPÄISCHE PATENTANMELDUNG

(11) **EP 3 200 123 A1**
(43) Veröffentlichungstag der Anmeldung: **02.08.2017**
(21) Anmeldenummer: 16153187.6
(22) Anmeldetag: 28.01.2016
(51) Int. Cl.: G06K 9/00, G06K 9/62

(54) **TEXTERKENNUNG**

(71) Anmelder: Siemens Aktiengesellschaft, 80333 München (DE)
(72) Erfinder: SCHAMBACH, Dr. Marc-Peter, 78464 Konstanz (DE)
(74) Vertreter: Maier, Daniel Oliver

(57) **Zusammenfassung**

Die Erfindung betrifft ein Verfahren zur Erkennung von aus Zeichen bestehenden, mehrzeiligen Text, insbesondere gebundener Handschrift.

Bei dem Verfahren (1) zur Erkennung von aus Zeichen (2) bestehenden, mehrzeiligen (3) Text (4), insbesondere mehrzeiliger, gebundener Handschrift (5), wird unter Verwendung eines rekurrenten neuronalen Netzes (6) für den aus den Zeichen (2) bestehenden, mehrzeiligen (3) Text (4) ein zweidimensionales Raster (7) von Symbolwahrscheinlichkeiten (8) erzeugt (100). Unter Verwendung der Symbolwahrscheinlichkeiten (8) werden die Zeichen (2) des aus den Zeichen (2) bestehenden, mehrzeiligen (3) Textes (4) erkannt (200).

## Beschreibung

Die Erfindung betrifft ein Verfahren zur Erkennung von aus Zeichen bestehenden, mehrzeiligen Text, insbesondere gebundener Handschrift.

In https://de.wikipedia.org/wiki/Texterkennung (erhältlich am 26.01.2016) sind Grundlagen einer Texterkennung beschrieben.

Texterkennung (auch meist als optische Zeichenerkennung (kurz "OCR" bzw. optical character recognition) bezeichnet) ist ein Begriff aus der Informationstechnik und bezeichnet eine automatisierte Texterkennung innerhalb von Text aufweisenden Bildern.

Texterkennung ist deshalb notwendig, weil optische Eingabegeräte, wie Scanner oder Digitalkameras, aber auch Faxempfänger, als Ergebnis ausschließlich Rastergrafiken liefern können, d. h. Text bzw. Zeichen als in Zeilen und Spalten angeordnete Punkte unterschiedlicher Färbung (Pixel).

Texterkennung bezeichnet dabei die Aufgabe, die dargestellten Zeichen eines Textes (in/auf einem Dokument) als solche zu erkennen, d. h. zu identifizieren und ihnen - beispielsweise im Falle von Buchstaben - einen Zahlenwert zuzuordnen, der ihnen nach üblicher Textcodierung zukommt (ASCII, Unicode).

Texterkennung ist dabei ein mehrstufiger Prozess, der mit einer globalen Strukturerkennung eines Gesamttextes beginnt, in der zuerst Textblöcke von graphischen Elementen bei dem Gesamttext unterschieden, dort bzw. innerhalb derer jeweils Zeilenstrukturen erkannt (Zeilensegmentierung) und schließlich dort bzw. innerhalb der Zeilen jeweils wiederum Einzelzeichen separiert (Zeichensegmentierung) werden. Anschließend erfolgt dann ein Mustervergleich von separierten Bildteilen als Kandidaten zur Erkennung von Einzelzeichen (Zeichenerkennung).

Bei der Entscheidung, welches Zeichen vorliegt, kann über weitere Algorithmen ein Kontext, wie ein sprachlicher Kontext, semantische Inhalte oder Wörterbücher, berücksichtigt werden -, was eine Qualität der Texterkennung insgesamt erhöhen kann.

Bei der Texterkennung erzielen künstliche neuronale Netze, d. h. die Anwendung von künstlichen neuronalen Netzen auf den zu erkennenden Text, dort insbesondere auf die/bei der Zeichensegmentierung und/oder Zeichenerkennung, wie insbesondere rekurrente neuronale Netze, eine hohe Erkennungswahrscheinlichkeit - und so eine Texterkennung mit hoher Zuverlässigkeit und Sicherheit.

Insbesondere bei handschriftlichen Text (bzw. dessen Erkennung), d. h. Text in Form von gebundener Handschrift, dessen Erkennung sich in der Regel als schwieriger als Text einer bestimmten, vorgegebenen Schriftart erweist, erweisen sich künstliche neuronale Netze, insbesondere rekurrente neuronale Netze als leistungsfähige Instrumente.

In https://de.wikipedia.org/wiki/Rekurrentes_neuronales_Netz (erhältlich am 26.01.2016) sind rekurrente neuronale Netze beschrieben. Solche rekurrente neuronale Netze sind neuronale Netze, die sich (im Gegensatz zu sogenannten Feedforward-Netzen) durch Verbindungen von Neuronen einer Schicht zu Neuronen derselben oder einer vorangegangenen Schicht auszeichnen.

Aus "A Novel Connectionist System for Unconstrained Handwriting Recognition", Alex Graves, Marcus Liwicki, Santiago Fernandez, Roman Bertolami, Horst Bunke, Jürgen Schmidhuber, 9. Mai 2008, ist ein Verfahren zur Erkennung von aus Zeichen bestehenden, mehrzeiligen Text, hier im Speziellen gebundener Handschrift, unter Verwendung eines rekurrenten neuronalen Netzes bekannt.

"A Novel Connectionist System for Unconstrained Handwriting Recognition", Alex Graves, Marcus Liwicki, Santiago Fernandez, Roman Bertolami, Horst Bunke, Jürgen Schmidhuber, 9. Mai 2008, beschreibt hierzu ein sogenanntes bidirektionales Long Short-Term Memory rekurrentes neuronales Netz (BLSTM), d. h. ein rekurrentes neuronales Netz mit einer bidirektionalen Long Short-Term Memory Architektur, was die Architektur eines bidirektionalen rekurrenten neuronalen Netzes (BRNN) mit der eines rekurrenten neuronalen Netzes mit einer Long Short-Term Memory Architektur (LSTM) kombiniert.

Die Netzausgabe bei diesem BLSTM aus "A Novel Connectionist System for Unconstrained Handwriting Recognition", Alex Graves, Marcus Liwicki, Santiago Fernandez, Roman Bertolami, Horst Bunke, Jürgen Schmidhuber, 9. Mai 2008, erfolgt dann über eine eindimensionale "Connectionist Temporal Classification" Ausgangsschicht (CTC Output Layer), welche eine Wahrscheinlichkeitsverteilung über die Zeichen- bzw. textuelle Transkription erzeugt. Unter Verwendung eines Wörterbuchs führt dann die Wahrscheinlichkeitsverteilung zu den Zeichen des Textes.

Die in "A Novel Connectionist System for Unconstrained Handwriting Recognition", Alex Graves, Marcus Liwicki, Santiago Fernandez, Roman Bertolami, Horst Bunke, Jürgen Schmidhuber, 9. Mai 2008, beschriebene Texterkennung unterliegt der Einschränkung bzw. der Bedingung, dass hier die Erkennung eindimensional angewandt wird. D. h., die Zeichensegmentierung und die Zeichenerkennung erfolgen - in einem einzigen Schritt mittels des rekurrenten neuronalen Netzes - für jede Zeile des mehrzeiligen, handschriftlich-gebundenen Textes separat, wobei für jede Zeile eine eindimensionale Sequenz von Symbolwahrscheinlichkeiten erzeugt wird. Über die Symbolwahrscheinlichkeiten der eindimensionalen Sequenz (kombiniert mit einem Wörterbuch) lassen sich dann die Zeichen der jeweiligen Zeile erkennen.

Die Zeilensegmentierung für den zu erkennenden mehrzeiligen Text erfolgt bei "A Novel Connectionist System for Unconstrained Handwriting Recognition", Alex Graves, Marcus Liwicki, Santiago Fernandez, Roman Bertolami, Horst Bunke, Jürgen Schmidhuber, 9. Mai 2008, dabei vorab und außerhalb der Anwendung des rekurrenten neuronalen Netzes.

Aus "Offline Handwriting Recognition with Multidimensional Recurrent Neural Networks", Alex Graves, Jürgen Schmidhuber, ist ebenfalls ein Verfahren zur Erkennung von aus Zeichen bestehenden, in diesem Fall einzeiligem Text, hier im Speziellen (ebenfalls) gebundener (einzeiliger) Handschrift, unter Verwendung eines rekurrenten neuronalen Netzes bekannt, wobei in diesem Fall ein sogenanntes multidirektionales Long Short-Term Memory rekurrentes neuronales Netz (MDLSTM), d. h. ein rekurrentes neuronales Netz mit einer multidirektionalen Long Short-Term Memory Architektur, was die Architektur eines multidirektionalen rekurrenten neuronalen Netzes (MDRNN) mit der eines rekurrenten neuronalen Netzes mit einer Long Short-Term Memory Architektur (LSTM) kombiniert, zum Einsatz kommt.

Die Netzausgabe bei diesem MDLSTM aus "Offline Handwriting Recognition with Multidimensional Recurrent Neural Networks", Alex Graves, Jürgen Schmidhuber, hier eine (kollabierte) eindimensionale Sequenz, erfolgt dann wieder über eine eindimensionale "Connectionist Temporal Classification" Ausgangsschicht (CTC Output Layer), welche - aus der (kollabierten) eindimensionalen Sequenz des MDLSTM - eine Wahrscheinlichkeitsverteilung über die Zeichen- bzw. textuelle Transkription erzeugt, welche dann zu den Zeichen des einzeiligen Textes führt.

Der Erfindung liegt die Aufgabe zugrunde, die Nachteile und Einschränkungen im Stand der Technik bei einer Texterkennung zu verbessern. Insbesondere liegt der Erfindung die Aufgabe zugrunde, mehrzeiligen Text, insbesondere gebundene Handschrift, zuverlässig zu erkennen.

Diese Aufgabe wird durch ein Verfahren zur Erkennung von aus Zeichen bestehenden, mehrzeiligen Text, insbesondere gebundener Handschrift, mit den Merkmalen gemäß dem unabhängigen Patentanspruch gelöst.

Bei dem Verfahren zur Erkennung von aus Zeichen bestehenden, mehrzeiligen Text wird unter Verwendung eines rekurrenten neuronalen Netzes für den aus den Zeichen bestehenden, mehrzeiligen Text ein zweidimensionales Raster (zweidimensionales Array) von Symbolwahrscheinlichkeiten erzeugt.

Anders ausgedrückt, das zweidimensionale Raster (zweidimensionales Array) von Symbolwahrscheinlichkeiten wird als Netzausgabe durch Aktivierung des rekurrenten neuronalen Netzes berechnet.

Als rekurrentes neuronales Netz kann dabei beispielsweise ein rekurrentes neuronales Netz mit multidirektionaler Long Short-Term Memory Architektur (MDLSTM) verwendet werden.

Unter Verwendung dieser von dem rekurrenten neuronalen Netz erzeugten, zweidimensional gerasterten Symbolwahrscheinlichkeiten werden dann die Zeichen des aus den Zeichen bestehenden, mehrzeiligen Textes erkannt.

Dazu können weiter auch - zur Verbesserung der Erkennungsergebnisse - Sprachmodelle, Lexika oder auch strukturelles Wissen (über den Text) herangezogen werden.

Als Netzeingabe für das rekurrente neuronale Netz, wie beispielswiese das MDLSTM, kann eine aus dem aus den Zeichen bestehenden, mehrzeiligen Text erzeugte Rastergrafik (2D Raster-/Input-Bild) verwendet werden. Dabei kann die Erzeugung der Rastergraphik beispielsweise durch ein Scannen des aus den Zeichen bestehenden, mehrzeiligen Textes bzw. eines entsprechendes Dokumentes mit diesem mehrzeiligen Textes erfolgen.

Das verfahrensgemäße rekurrente neuronale Netz, wie beispielsweise das MDLSTM, transformiert dann die Netzeingabe, d.h. in diesem Fall das 2D Rasterbild, - über meist mehrere Schichten des rekurrenten neuronalen Netzes - in dieses zweidimensionale Raster (zweidimensionalen Arrays) von den Symbolwahrscheinlichkeiten, unter Verwendung derer dann die Zeichen des mehrteiligen Textes erkannt werden.

Eine Größe dieses zweidimensionalen Rasters (zweidimensionalen Arrays) von den Symbolwahrscheinlichkeiten kann sich dabei aus einer Vergröberung eines den aus Zeichen bestehenden, mehrzeiligen Text aufweisenden Bildes ("Scan") ergeben. Anders ausgedrückt, durch Vergröberung des - ursprünglich hochaufgelösten - 2D Rasterbildes des aus Zeichen bestehenden, mehrzeiligen Textes (Subsampling z.B. durch Mittelwertbildung oder Faltung) lässt sich die Größe dieses zweidimensionalen Rasters (zweidimensionalen Arrays) von den Symbolwahrscheinlichkeiten anpassen/verringern.

Die Erfindung basiert auf dem Grundgedanken, unter Verwendung eines rekurrenten neuronalen Netzes die Detektion (Zeilen-/- Zeichensegmentierung) und Erkennung von mehrzeiligen Text in einem (einzigen) Schritt ("directly") durchzuführen. D. h., die Zeilensegmentierung, die Zeichensegmentierung und die Zeichenerkennung erfolgen ("directly") - mittels des rekurrenten, neuronalen Netzes - in einem einzigen Vorgang.

Dies geschieht in Analogie zur - eindimensionalen bzw. zeilenweisen - Zeichensegmentierung und Zeichenerkennung, wie beispielsweise aus "A Novel Connectionist System for Unconstrained Handwriting Recognition", Alex Graves, Marcus Liwicki, Santiago Fernandez, Roman Bertolami, Horst Bunke, Jürgen Schmidhuber, 9. Mai 2008, oder aus "Offline Handwriting Recognition with Multidimensional Recurrent Neural Networks", Alex Graves, Jürgen Schmidhuber, (nun verfahrensgemäß aber zweidimensional).

Das Prinzip der eindimensionalen bzw. zeilenweisen Zeichensegmentierung und Zeichenerkennung wird so bei dem Verfahren auf zwei Dimensionen ((1) Zeichen in einer Zeile und (2) mehrere Zeilen unter-/übereinander) erweitert. An die Stelle der eindimensionalen Sequenz von Symbolwahrscheinlichkeiten (vgl. "A Novel Connectionist System for Unconstrained Handwriting Recognition", Alex Graves, Marcus Liwicki, Santiago Fernandez, Roman Bertolami, Horst Bunke, Jürgen Schmidhuber, 9. Mai 2008, oder "Offline Handwriting Recognition with Multidimensional Recurrent Neural Networks", Alex Graves, Jürgen Schmidhuber) tritt bei dem Verfahren das zweidimensionale Raster (zweidimensionales Array) von Symbolwahrscheinlichkeiten. Bei dem rekurrenten, neuronalen Netz sind dies die Aktivierungen der Netz-Ausgabeschicht.

Anders ausgedrückt, das Verfahren überträgt die eindimensionale bzw. zeilenweise - Zeichensegmentierung und Zeichenerkennung einer Texterkennung auf eine ("directly") zweidimensionale Zeilen- /Zeichensegmentierung und Zeichenerkennung in einem zweidimensionales Bild eines Dokumentes. Die Übertragung erfolgt durch die Erweiterung von den jeweils eindimensionalen Symbolsequenzen (einer Zeile) auf einen planaren gerichteten (Zeichen-)Graphen (des mehrzeiligen Textes) (, welcher die 2D Nachbarschaftsbeziehungen zwischen den Zeichen des Textes wiederspiegelt) mit einer äquivalenten Definition von Zuordnungen auf die entsprechenden Symbolwahrscheinlichkeiten.

D.h., wo bei der eindimensionalen bzw. zeilenweisen Zeichensegmentierung und Zeichenerkennung die Zeichenerkennung durch optimale Zuordnung einer - die Zeichen einer Zeile repräsentierenden - festen (eindimensionalen) Zeichensequenz zu einer (entsprechend eindimensionalen) variabel langen Sequenz von Symbolwahrscheinlichkeiten erfolgt, so erweitert sich verfahrensgemäß im zweidimensionalen Fall ((2) mehrere Zeilen unter-/übereinander) die - die Zeichen einer jeweiligen Zeile repräsentierenden - feste (eindimensionale) Zeichensequenz (der Zeile) zu dem planaren gerichteten (Zeichen-)Graphen (, der die mehreren unter-/übereinander angeordneten Zeilen beschreibt (zweite Dimension)).

Die Zuordnung kann dann analog durch optimale "Segmentierung" des zweidimensionalen Rasters der Symbolwahrscheinlichkeiten erfolgen, welche die (mehrdimensionalen) Nachbarschaftsrelationen des planaren gerichteten (Zeichen-)Graphen erhält. Die Zuordnung kann mit einer dynamischen Programmierung, wie einem Viterbi- oder Forward-Backward-Algorithmus, oder mit Markov Random Fields berechnet werden.

Ermöglicht das Verfahren die Texterkennung, d. h. die Zeilensegmentierung, die Zeichensegmentierung und die Zeichenerkennung, bei aus Zeichen bestehenden, mehrzeiligen Text, insbesondere gebundener Handschrift, mittels des neuronalen rekurrenten Netzes in einem einzigen Schritt ("directly"), so erweist sich das Verfahren als einfaches und fehlertolerantes Instrument für eine Texterkennung, können durch das Verfahren insbesondere teure und fehleranfällige Feedback-Schleifen vermieden werden.

Insbesondere bei schwierig zu detektierendem Text, d. h. bei einer Unterscheidung von Text und Störungen in einem (den Text aufweisenden) Dokument, und bei Trennung von sich überlappenden Texten, wie insbesondere bei Texten aus gebundener Handschrift, erweist sich das Verfahren als besonders Vorteilhaft, führt das Verfahren hier zu einer robusten Texterkennung mit hoher Zuverlässigkeit und hoher Sicherheit.

### Training

Für ein Training des verfahrensgemäßen rekurrenten neuronalen Netzes kann die Netzausgabe des rekurrenten neuronalen Netzes über eine "Mehrdimensionale-Connectionist Classification" Ausgangsschicht (MD-CC), insbesondere eine "2D-Connectionist Classification" Ausgangsschicht (2D-CC), - in Analogie zu einer eindimensionalen "Connectionist Temporal Classification" Ausgangsschicht (CTC Output Layer) (, welcher MD-CC Output Layer bzw. 2D-CC Output Layer beispielsweise von der multidirektionalen Long Short-Term Memory Architektur eines entsprechenden rekurrenten neuronalen Netzes gespeist wird,) bei dem rekurrenten neuronalen Netz erfolgen.

Die Erkennung - im Training - kann dann durch optimale Zuordnung (nach einem Optimalitätskriterium) eines - den aus den Zeichen bestehenden, mehrzeiligen Text repräsentierenden - planaren, gerichteten (Zeichen-)Graphen (Sollmuster) zu dem zweidimensionalen Raster der Symbolwahrscheinlichkeiten erfolgen ("Segmentierung"). Hierbei kann die Zuordnung beispielsweise mit einer dynamischen Programmierung, wie einem Viterbi- oder Forward-Backward-Algorithmus, oder mit Markov Random Fields berechnet werden.

Ein Training des verfahrensgemäßen rekurrenten, neuronalen Netzes, wie beispielsweise ein MDLSTM, - Trainingsdaten für das Training können dabei eingescannte Dokumente mit mehrzeiliger Zeichen- bzw. textueller Transkription (Referenzdokumentbilder) sein - kann mit Backpropagation - durch Zuordnung der Netzausgabe ((zweidimensionales Array/Raster von) Symbolwahrscheinlichkeiten) zu den mit den Textzeilen referenzierten Dokumentenbildern (bzw. des - den aus den Zeichen bestehenden, mehrzeiligen Text repräsentierenden - planaren, gerichteten (Zeichen-)Graphen (Sollmuster)) erfolgen. Anders ausgedrückt, die Fehlerfunktion bei dem zu trainierenden, verfahrensgemäßen rekurrenten, neuronalen Netz ergibt sich aus der Zuordnung der Netzausgabe ((zweidimensionales Raster/Array von) Symbolwahrscheinlichkeiten) und der mehrzeilig referenzierten Zeichen- bzw. textuellen Transkription (bzw. planaren, gerichteten (Zeichen-)Graphen).

Als "Trainingsstrategie" kann darüber hinaus auch ein "Curriculum Learning" - wie beispielsweise aus "Curriculum Learning for Handwritten Text Line Recognition", Jerome Louradour, Christopher Kermorvant, Proceedings of Document Analysis Systems 2014, Tours, France - verwendet werden, wodurch eine Konvergenz bei dem Training schneller und robuster ist. Bei dem "Curriculum Learning" bei dem zu trainierenden, verfahrensgemäßen rekurrenten, neuronalen Netz werden so dann zunächst Einzelworte, dann Zeilen und später ganze Absätze und Dokumente für das Training verwendet.

Wird insbesondere das verfahrensgemäße rekurrente, neuronale Netz darüber hinaus auch rotationsinvarient trainiert, können durch das Verfahren insbesondere auch geschwungene und runde Schriftzüge bei einem Text detektiert und erkannt werden.

Die Erkennung kann entweder durch einen Hypothesenabgleich erfolgen, was einer wörterbuch-/lexikonbasierten Schrifterkennung entspricht, oder durch eine Suche von besten Wegen durch das zweidimensionale Raster von den Symbolwahrscheinlichkeiten, was einer Zeilendetektion auf Basis von Erkennungsergebnissen entspricht.

Bevorzugte Weiterbildungen der Erfindung ergeben sich auch aus den abhängigen Ansprüchen und beziehen sich sowohl auf das Verfahren, wie auch auf die Vorrichtung.

So ist nach einer bevorzugten Weiterbildung vorgesehen, dass eine Rastergrafik für den aus den Zeichen bestehenden, mehrzeiligen Text erzeugt wird.

Dabei kann die Erzeugung der Rastergraphik besonders bevorzugt durch ein Scannen eines den aus den Zeichen bestehenden, mehrzeiligen Text aufweisenden Dokumentes erfolgen.

Weiterhin kann bevorzugt auch vorgesehen sein, dass das zweidimensionale Raster von Symbolwahrscheinlichkeiten durch Aktivierung des rekurrenten neuronalen Netzes berechnet wird. Anders ausgedrückt, Aktivierungen einer Netzausgabe des rekurrenten neuronalen Netzes erzeugen das zweidimensionale Raster von den Symbolwahrscheinlichkeiten.

Ferner kann auch bevorzugt vorgesehen sein, dass das rekurrente neuronale Netz ein "Multidirectional Long Short-Term Memory (MDLSTM)" ist.

Auch kann besonderes bevorzugt das rekurrente neuronale Netz, insbesondere das "Multidirectional Long Short-Term Memory (MDLSTM)", einen MD-CC Output Layer, insbesondere einen 2D-CC Output Layer, aufweisen. Anders ausgedrückt, das rekurrente neuronale Netz, insbesondere das "Multidirectional Long Short-Term Memory (MDLSTM)", kann, insbesondere im Trainingsfall des rekurrenten neuronalen Netzes, einen MD-CC Output Layer bzw. einen 2D-CC Output Layer speisen bzw. eine Netzausgabe des rekurrenten neuronalen Netzes erfolgt über einen MD-CC Output Layer bzw. 2D-CC Output Layer.

Nach einer weiteren bevorzugten Ausgestaltung ist vorgesehen, dass das rekurrente neuronale Netz trainiert, insbesondere durch Backpropagation und/oder mit "Curriculum Learning" trainiert, wird.

Ferner lässt sich das Verfahren (oder Weiterbildungen bzw. Ausgestaltungen desselben) einsetzen zu einer Erkennung eines mehrzeiligen, insbesondere handschriftlichen, Textes. D.h., aus den gerasterten Symbolwahrscheinlichkeiten des rekurrenten neuronalen Netzes ergeben sich die Zeichen des mehrzeiligen, insbesondere handschriftlichen, Textes. Eine Verbesserung kann sich auch ergeben, wird hierbei, d.h. bei der Erkennung, wird weiter auch ein Sprachmodell, ein Lexika oder strukturellen Wissen über den Text verwendet.

Nach einer Weiterbildung, insbesondere für das Training des verfahrensgemäßen neuronalen Netzes, ist auch vorgesehen, dass aus einem aus Zeichen bestehenden, mehrzeiligen Text ein planarer (Zeichen-)Graph (Sollmuster), welcher insbesondere 2D Nachbarschaftsbeziehungen zwischen den Zeichen des Textes berücksichtigt, erzeugt wird.

Im Training kann dann dieser planare (Zeichen-)Graph (Sollmuster) und das zweidimensionale Raster von Symbolwahrscheinlichkeiten zueinander zugeordnet werden, um so das verfahrensgemäße neuronale Netz zu trainieren.

Weiter kann diese Zuordnung mit dynamischer Programmierung, insbesondere unter Verwendung eines Viterbi- oder Forward-Backward-Algorithmus, oder mit Markov Random Fields berechnet werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung von einem oder mehreren Ausführungsbeispielen, das bzw. die im Zusammenhang mit den Figuren näher erläutert wird bzw. werden.

Die Erfindung ist jedoch nicht auf die in dem bzw. den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Gleiche Teile/Bauteile, Komponenten, Objekte u. ä. sind durch gleiche Bezugszeichen in den Figuren (falls mehrere vorliegend) gekennzeichnet.

Es zeigt die
- FIG: schematisch eine (Text-)Erkennung von mehrzeiliger, gebundener Handschrift mittels eines rekurrenten neuronalen Netzes gemäß einem Ausführungsbeispiel.

### (Text-)Erkennung von mehrzeiliger, gebundener Handschrift mittels rekurrenter neuronaler Netze

Die FIG zeigt schematisch eine (Text-)Erkennung 1 von mehrzeiliger 3, gebundener Handschrift 5 mittels eines rekurrenten neuronalen Netzes 6 - inklusive eines Trainings 700 dieses rekurrenten neuronalen Netzes 6.

Eine solcher Text 4 aus einer mehrzeiligen 3, gebundenen Handschrift 5 kann beispielsweise bei einer handschriftlichen Adresse, wie einem handschriftlich ausgefüllten Adressfeld, oder anderweitig handschriftlich beschriebenem Dokument, wie einem Brief u. ä., auftreten.

Wie FIG auch verdeutlicht handelt es sich bei vorliegendem, für die (Text-)Erkennung eingesetzten, rekurrenten neuronalen Netz 6 um ein MDLSTM 6 - mit einer kombinierten MDLSTM Architektur 11 (Neuronenstrukturen 17 aus Neuronen 16 kombiniert aus einer Architektur eines multidirektionalen rekurrenten neuronalen Netzes (MDRNN) mit der eines rekurrenten neuronalen Netzes mit einer Long Short-Term Memory Architektur (LSTM)), wie es beispielsweise in "Offline Handwriting Recognition with Multidimensional Recurrent Neural Networks", Alex Graves, Jürgen Schmidhuber, beschrieben ist.

Wie die FIG zeigt, soll in vorliegendem Fall ein mehrzeiliger 3, in gebundener Handschrift 5 verfasster Text 4 (aus gebundenen (handschriftlichen) Zeichen 2) eines Dokumentes 9 erkannt werden 1.

Dieser mehrzeilige 3, handschriftlich-gebundene Text 4 bzw. das Dokument 9 wird zunächst, wie die FIG verdeutlicht, mittels eines Scanners (nicht gezeigt) (als Farb- oder Graubild) eingescannt 300, wodurch ein eingescanntes Bild (Eingangsbild), d. h. eine diesbezügliche entsprechende Rastergraphik (mit/aus Pixeln), erzeugt wird (2D Raster-/Inputbild).

Zu einer Geschwindigkeitssteigerung können gegebenenfalls Bereiche des Dokumentes 9 mit einem geringen Kontrast von den bei der (Text-)Erkennung 1 durchgeführten Operationen und Berechnungen ausgeschlossen werden.

Weiterhin kann gegebenenfalls das eingescannte Bild, beispielsweise durch Skalierung u. ä. (, um gegebenenfalls Zeichen an eine vorgegebene Größe und/oder Ausrichtung anzupassen), bearbeitet werden ("Preprocessing").

Wie weiter FIG verdeutlicht, wird dieses 2D Rasterbild als Input/Netzeingabe an das MDLSTM 6 angelegt. Schichten 11 des - zuvor trainierten - MDLSTM 6 verarbeiten das 2D Rasterbild 100, wobei das MDLSTM 6 als Netzausgabe - als dessen Aktivierungen - ein zweidimensionales Raster/Array 7 von Symbolwahrscheinlichkeiten 8 (über die Zeichen- bzw. textuelle Transkription) erzeugt 100.

D. h., die - in diesem Fall - zweidimensionale Netzausgabe 10 des MDLSTM 6 wird durch Aktivierung des MDLSTM 6 berechnet. Die Netzausgabe 10 ist so ein bzw. das zweidimensionale Array 7 von Symbolwahrscheinlichkeiten 8 100.

Unter Verwendung dieser von dem MDLSTM 6 erzeugten, zweidimensional gerasterten Symbolwahrscheinlichkeiten 8 werden dann die handschriftlichen Zeichen 2 des aus den Zeichen 2 bestehenden, mehrzeiligen 3 Textes 4 erkannt 200 (erkanntes Zeichen 15, wodurch so die Detektion (Zeilen- und Zeichensegmentierung) und Erkennung (Zeichenerkennung) (unmittelbar) in einem Schritt erfolgt ist.

### Training 700 des rekurrenten neuronalen Netzes 6 bzw. des MDLSTM 6 (mittels 2D-CC Output Layer 12)

Für ein Training 700 des MDLSTM 6 erfolgt, wie FIG auch verdeutlicht, die Netzausgabe des MDLSTM 6 über eine "2D-Connectionist Classification" Ausgangsschicht (2D-CC Output Layer) 12 - in Analogie zu einer eindimensionalen "Connectionist Temporal Classification" Ausgangsschicht (CTC Output Layer).

Für das Training 700 des MDLSTM 6 stehen eingescannte Dokumente mit mehrzeiliger Zeichen- bzw. textueller Transkription (Referenzdokumentbilder) als Trainingsdaten zur Verfügung.

Das Training 700 des MDLSTM 6 erfolgt dann durch Backpropagation 800 (Trainingsverfahren 800) durch optimale Zuordnung 600 (nach einem Optimalitätskriterium) der Netzausgabe 10 ((zweidimensionales Array 7 der) Symbolwahrscheinlichkeiten 8) zu einem - den aus den Zeichen 2 bestehenden, mehrzeiligen 3 Text 4 (d.h. den - mit den Textzeilen referenzierten - Dokumentenbildern (Trainingsdaten)) repräsentierenden - planaren, gerichteten (Zeichen-)Graphen 12 (Sollmuster).

D. h., die Fehlerfunktion bei dem zu trainierenden MDLSTM 6 ergibt sich aus der (optimale) Zuordnung (nach einem Optimalitätskriterium) der Netzausgabe 10 ((zweidimensionales Array 7) der Symbolwahrscheinlichkeiten 8) zu der referenzierten mehrzeiligen textuellen Transkription bzw. dem entsprechenden planaren, gerichteten (Zeichen-)Graph (Sollmuster).

Die Zuordnung wird dabei mittels dynamischer Programmierung berechnet.

Als "Trainingsstrategie" 900 wird dabei ein "Curriculum Learning" 900 - wie beispielsweise aus "Curriculum Learning for Handwritten Text Line Recognition", Jerome Louradour, Christopher Kermorvant, Proceddings of Document Analysis Systems 2014, Tours, France, bekannt - verwendet. D. h., es werden bei dem zu trainierenden MDLSTM 6 zunächst Einzelworte, dann Zeilen und später ganze Absätze und Dokumente für das Training 700 verwendet.

Die Erkennung erfolgt durch eine Suche von besten Wegen durch das zweidimensionale Raster 7 von den Symbolwahrscheinlichkeiten 8, was einer Zeilendetektion auf Basis von Erkennungsergebnissen entspricht.

Obwohl die Erfindung im Detail durch das bzw. die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Verfahren, Texterkennung
- 2: Zeichen
- 3: Zeile, mehrzeilig
- 4: Text
- 5: Handschrift, handschriftlich
- 6: rekurrentes neuronales Netz, MDLSTM
- 7: zweidimensionales Raster/Array
- 8: Symbolwahrscheinlichkeit
- 9: Dokument
- 10: Netzausgabe
- 11: MDLSTM Schichten/Layer bzw. MDLSTM Architektur
- 12: 2D-CC Output Layer, MD-CC Output Layer

- 14: planarer, gerichteter (Merkmalsvektoren-)(Zeichen-)Graph
- 15: erkanntes Zeichen
- 16: Neuron
- 17: Neuronenstruktur

100 Erzeugung eines zweidimensionalen Rasters/Arrays (7) von Symbolwahrscheinlichkeiten (8), Berechnung eines zweidimensionalen Rasters/Arrays (7) von Symbolwahrscheinlichkeiten (8) durch Aktivierung eines rekurrenten neuronalen Netzes 6 200 Erkennen von Zeichen (2) eines aus Zeichen (2) bestehenden, mehrzeiligen (3) Textes (4) unter Verwendung von Symbolwahrscheinlichkeiten (8)
300 Einscannen eines Dokumentes (9) bzw. eines aus Zeichen (2) bestehenden, mehrzeiligen (3) Textes (4) auf einem Dokument (9), Erzeugen einer Rastergrafik für den aus den Zeichen bestehenden, mehrzeiligen Text erzeugt wird 300, insbesondere durch ein Scannen eines den aus den Zeichen bestehenden, mehrzeiligen Text aufweisenden Dokumentes
500 Umwandlung/Generierung eines planaren (Zeichen-)Graphs (Sollmuster)
600 Zuordnung eines planaren (Zeichen-)Graphs zu einem zweidimensionalen Raster 7 von Symbolwahrscheinlichkeiten 8, Segmentierung
700 Training eines rekurrenten neuronalen Netzes 6
800 Trainingsverfahren, Backpropagation
900 Trainingsstrategie, "Curriculum Learning"

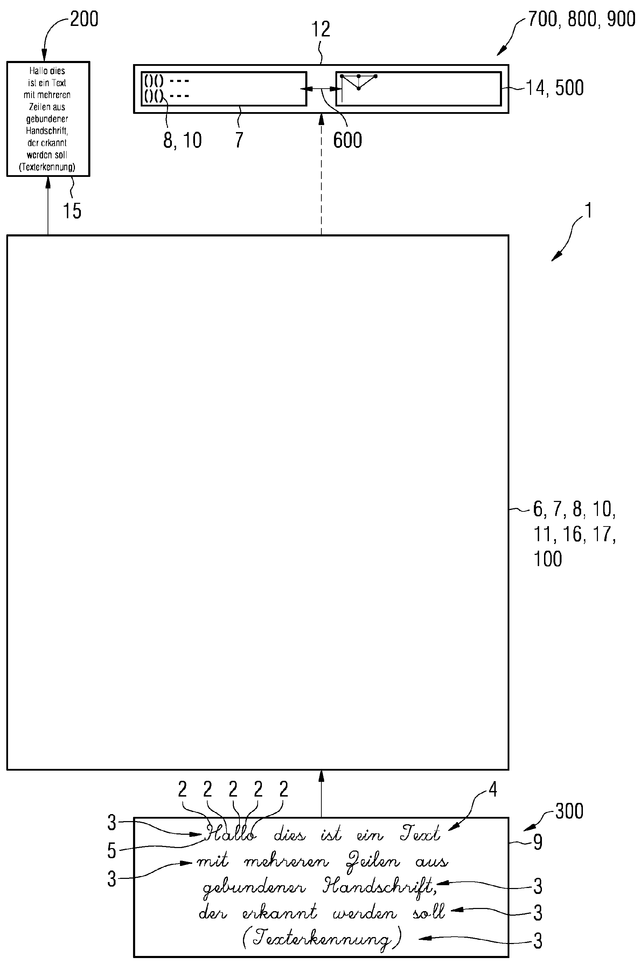

## Patentansprüche

1. Verfahren (1) zur Erkennung von aus Zeichen (2) bestehenden, mehrzeiligen (3) Text (4), insbesondere mehrzeiliger, gebundener Handschrift (5),
**dadurch gekennzeichnet, dass**
unter Verwendung eines rekurrenten neuronalen Netzes (6) für den aus den Zeichen (2) bestehenden, mehrzeiligen (3) Text (4) ein zweidimensionales Raster (7) von Symbolwahrscheinlichkeiten (8) erzeugt wird (100) und unter Verwendung der Symbolwahrscheinlichkeiten (8) die Zeichen (2) des aus den Zeichen (2) bestehenden, mehrzeiligen (3) Textes (4) erkannt werden (200).

2. Verfahren (1) nach mindestens einem der voranstehenden Ansprüche,
**dadurch gekennzeichnet, dass**
eine Rastergrafik für den aus den Zeichen (2) bestehenden, mehrzeiligen (3) Text (4) erzeugt wird (300), insbesondere durch ein Scannen eines den aus den Zeichen (2) bestehenden, mehrzeiligen (3) Text (4) aufweisenden Dokumentes (9) (300).

3. Verfahren (1) nach mindestens einem der voranstehenden Ansprüche,
**dadurch gekennzeichnet, dass**
das zweidimensionale Raster (7) von Symbolwahrscheinlichkeiten (8) durch Aktivierung des rekurrenten neuronalen Netzes (6) berechnet wird.

4. Verfahren (1) nach mindestens einem der voranstehenden Ansprüche,
**dadurch gekennzeichnet, dass**
das rekurrente neuronale Netz (6) ein "multidirectional Long Short-Term Memory (MDLSTM)" (6) ist.

5. Verfahren (1) nach mindestens einem der voranstehenden Ansprüche,
**dadurch gekennzeichnet, dass**
das rekurrente neuronale Netz (6), insbesondere zumindest bei einem Training (700) des rekurrenten neuronalen Netzes (6), einen MD-CC Output Layer (12), insbesondere einen 2D-CC Output Layer (12), aufweist.

6. Verfahren (1) nach mindestens einem der voranstehenden Ansprüche,
**dadurch gekennzeichnet, dass**
das rekurrente neuronale Netz (6) trainiert (700), insbesondere durch Backpropagation (800) und/oder mit "Curriculum Learning" (900) trainiert (700), wird.

7. Verfahren (1) nach mindestens einem der voranstehenden Ansprüche,
**dadurch gekennzeichnet, dass**
aus einem aus Zeichen (2) bestehenden, mehrzeiligen (3) Text (4), insbesondere bei einem Training (700) des neuronalen Netzes (6), ein planarer (Zeichen-)Graph (14) (Sollmuster) erzeugt wird (500).

8. Verfahren (1) nach mindestens dem voranstehenden Anspruch,
**dadurch gekennzeichnet, dass**
der planare (Zeichen-)Graph (14) und das zweidimensionale Raster (7) von Symbolwahrscheinlichkeiten (8) zueinander zugeordnet werden (600).

9. Verfahren (1) nach mindestens dem voranstehenden Anspruch,
**dadurch gekennzeichnet, dass**
die Zuordnung (600) mit dynamischer Programmierung, insbesondere unter Verwendung eines Viterbi- oder Forward-Backward-Algorithmus, oder mit Markov Random Fields berechnet wird.

10. Verfahren (1) nach mindestens einem der voranstehenden Ansprüche,
eingesetzt zu einer Erkennung eines mehrzeiligen (3), handschriftlichen (5) Textes (4).
